# EUROPEAN PATENT SPECIFICATION

(11) **EP 4 713 276 B1**
(45) Date of publication and mention of the grant of the patent: **26.08.2026**
(21) Application number: 25747240.7
(22) Date of filing: 07.07.2025
(51) Int. Cl.: B65G 47/96

(54) **A SYSTEM FOR SORTING OBJECTS, IN PARTICULAR BAGGAGE, PARCELS, POSTAL ITEMS OR LOOSE OBJECTS**
SYSTEM ZUM SORTIEREN VON OBJEKTEN, INSBESONDERE GEPÄCK, PAKETEN, POSTSTÜCKEN ODER LOSEN OBJEKTEN
SYSTÈME DE TRI D'OBJETS, EN PARTICULIER DE BAGAGES, DE COLIS, D'ARTICLES POSTAUX OU D'OBJETS EN VRAC

(30) Priority: 08.07.2024 IT 202400015706
(43) Date of publication of application: 25.03.2026
(73) Proprietor: Leonardo S.p.A., 00195 Roma (IT)
(72) Inventor: FRANZONE, Cristiano, 00071 Pomezia (RM) (IT); MORTOLA, Massimo, 00071 Pomezia (RM) (IT); MONTANARI, Giada, 00071 Pomezia (RM) (IT); BRIANO, Andrea, 00071 Pomezia (RM) (IT); POZZO, Michele, 00071 Pomezia (RM) (IT)
(74) Representative: Studio Torta S.p.A.
(86) International application number: PCT/IB2025/056835
(87) International publication number: WO 2026/013530

(56) References cited:
- EP-A2- 0 456 297
- EP-A2- 1 609 745
- US-B2- 6 681 917

## Description

### Cross-Reference to Related Applications

This Patent Application claims priority from Italian Patent Application No. 102024000015706 filed on July 8, 2024.

### Technical Field

The present invention refers to a system for sorting objects, in particular baggage, parcels, postal items or loose objects.

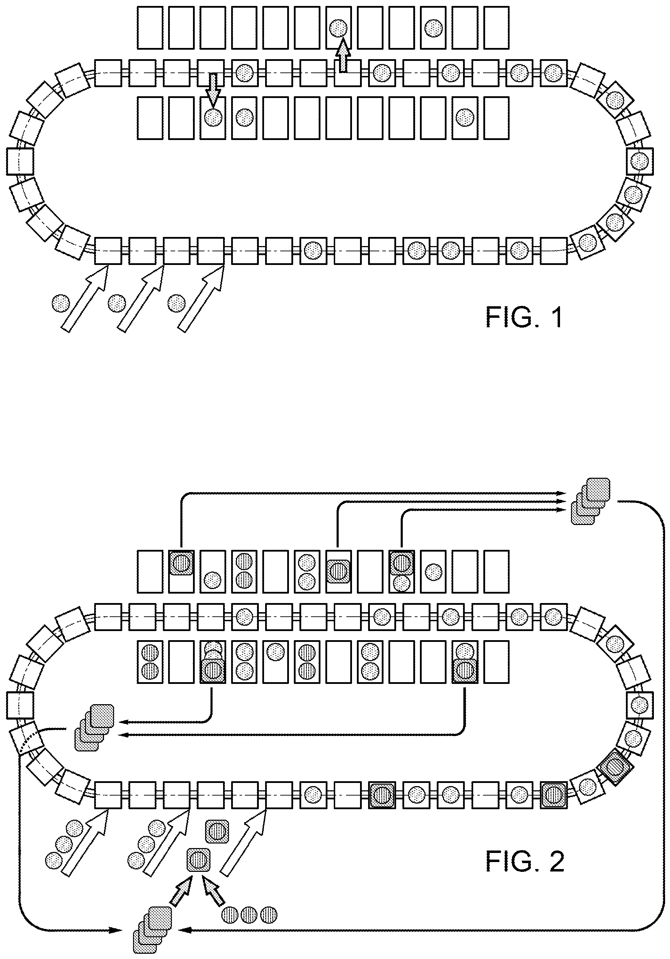

In the field of logistics, systems for sorting objects are known comprising a plurality of transport units, usually equipped with motorized belt orthogonal to the direction of travel of the sorting system, which are arranged adjacent to one another along a generally closed sorting path along which said transport units move (see figure 1 which schematically illustrates the known art) .

Each transport unit is able to receive an incoming object from an introduction unit, convey the object along the path and discharge/distribute the object in a given exit position.

More precisely a sorting system comprises a first plurality of introduction units or lines each configured to receive at the inlet single objects or sequences of objects appropriately separated and spaced from one another and feed them individually (one at a time) or in sequence to the transport units, allowing the object to be introduced into the sorting path without it colliding with other objects already present on the transport units composing the sorting system. The inlet units are configured to handle standard objects, namely objects having shape and dimensions that allow the transport and sorting thereof according to the usual techniques (for example belt conveyors), for example parallelepipedal-shaped objects, namely delimited by generally plane walls.

The sorting system comprises a second plurality of discharge units - also called outlets - each of which is configured to receive the objects discharged by the transport units when the objects are diverted from the sorting path. Typically the discharge units are arranged along the sides of the sorting path and can have different shapes, for example linear chutes, spiral screws or even more complex shapes or consisting of belt or roller conveyor systems.

Typically the sorting systems of the type described above are not able to process (or perform poorly with) non-machinable objects having non-standard shapes (in particular shapes other than a parallelepipedal shape or with envelope similar to a bag or cushion, for example cylindrical tubular shape or objects having different shape, also polyhedral, but unstable or characterized by the presence of laces, belts, protrusions of various types) or irregular shape without plane walls or also significantly larger dimensions than the standard ones (for example baggage consisting of a bag containing skis or golf clubs, characterized by being longer than the dimensions of the transport unit). In some extreme cases the handling of non-machinable objects may even damage the sorting system (spillage of the contents from the package, for example bolts or rigid metal parts spilt from a damaged cardboard box), sometimes making it unavailable for use due to the necessary repairs. For this reason, logistics operators tend to eliminate these non-machinable objects from the sorting process, segregating them upstream of the introduction lines to allow dedicated handling thereof, typically carried out manually and with predictable additional costs for the sorting process.

These non-machinable objects are difficult to transfer from an introduction unit to a transport unit due to the characteristics described above. Furthermore, the non-machinable objects could move with respect to the surface of the transport unit on which they are arranged and, for example, exit the sorting system (fly-out), requiring the operators to retrieve the objects that have fallen into the safety nets, or they could shift to (or even partially invade) other transport units (potentially making sorting impossible and incurring additional re-processing costs) or shift to the interface part between transport units, typically consisting of a flap or bellows, preventing discharge and requiring the operators to manually recover the object, at times interrupting the process.

In the sorting systems of known type, the non-machinable objects are, for example, loaded manually into special containers (see figure 2), usually provided with elastic belts designed to retain the object inside the container; the containers are fed to the transport units and directed towards a sub-set of discharge units which generally require a human intervention to physically separate the objects from the containers, which are recovered for other sorting operations. In particular, these containers are generally trays which, after being separated from the non-machinable objects, are collected by the discharge units, accumulated in a storage area and then conveyed towards the introduction units; typically, the collection, accumulation and transport process is carried out manually.

In this regard, EP0456297A2 discloses a system for sorting objects, in particular baggage, according to the preamble of claim 1. The system comprises: a main conveyor belt, a supply conveyor belt for supplying the baggage to the main conveyor belt and a discharge conveyor belt for discharging the objects towards an area external to the main conveyor belt. In particular, the baggage, before being supplied to the main conveyor belt, is positioned on supports fixed to the belts. Furthermore, EP1609745A2 describes a container comprising an upper surface consisting of an elastic material and in contact with an object to be conveyed and a lower surface in contact with a conveyor belt.

Another example of device or system of this type is described in US 6681917 B2.

The object of the present invention is to provide a system for sorting objects, which allows the sorting of non-machinable objects without the need for manual separation and recovery of the containers from the discharge units.

In this way all the discharge units are used for both the machinable objects and the non-machinable objects, reducing the overall dimensions of the sorting system. No dedicated operators are required for recovery of the containers from said discharge units, thus increasing the volume of objects handled by the sorting system with the same dimensions and reducing the mean unit cost of the sorting process.

### Solution to the Problem

The preceding object is achieved by the present invention which concerns an object sorting system, in particular baggage, parcels, postal items or loose objects of the type described in claim 1.

### Brief Description of the Drawings

The invention will be described with reference to the attached drawings which show a non-limiting embodiment thereof in which:
figure 1 schematically illustrates a closed loop sorting system
   - of cross-belt type - produced according to the known art for the processing of machinable objects;
figure 2 schematically illustrates a closed loop sorting system
   - of cross-belt type - produced according to the known art for the processing of machinable and non-machinable objects by means of containers;
figure 3 schematically illustrates a sorting system produced in accordance with the present invention;
figure 4 illustrates, in a perspective view and on an enlarged scale, a special mobile unit of the sorting system of figure 3;
figure 5 illustrates, viewed from above, use of the special mobile unit of the sorting system of figure 3; and
figure 6 illustrates a variation to the special mobile unit illustrated in figures 4 and 5.

### Preferred Embodiment Example

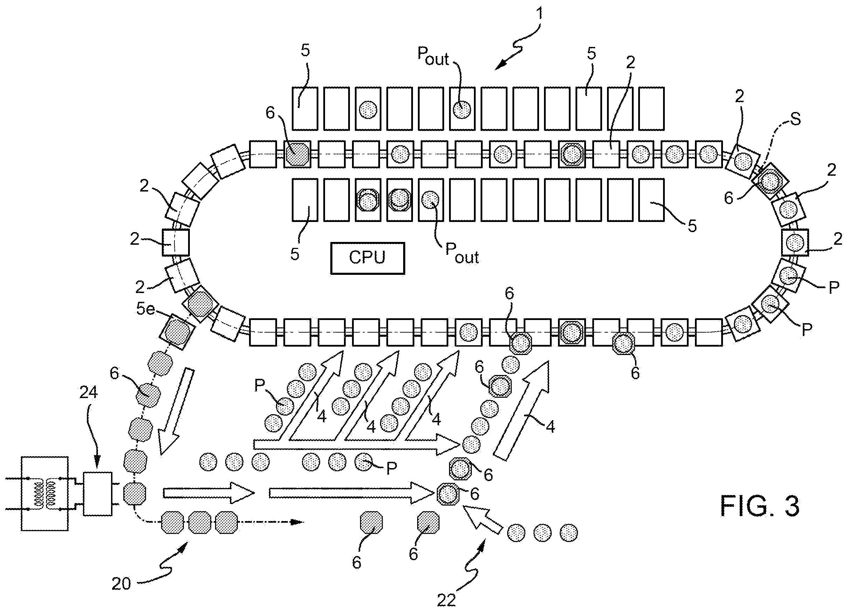

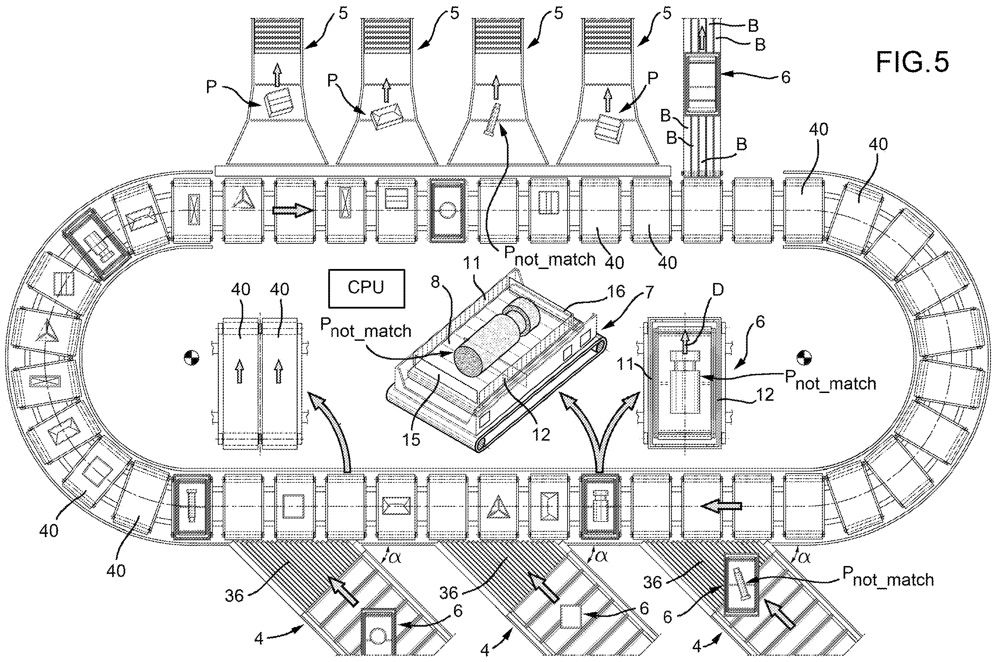

In figure 3, the number 1 indicates, overall, a sorting system for objects **P** (shown by circles in figure 3), in particular baggage, parcels, postal items or loose objects (for example clothing packages) comprising:
a plurality of transport units **2** (shown schematically by squares) which are arranged adjacent to one another, and move along a sorting path **S** along which the objects are conveyed; each transport unit **2,** equipped with one or more motorized belts 40 (see figure 5) with movement orthogonal to that of the sorting system, receives an object **Pᵢₙ** at the inlet from an introduction unit **4** (of known type, shown by an arrow in figure 3 and detailed in figure 5), conveys the object **P** along the path **S** until it receives a command to discharge the object **P** towards a discharge unit **5** (shown by a rectangle) also of known type.

As can be seen in figure 5, the interface part of the introduction unit **4** with the sorting system 1 is typically made with parallel belts 36 arranged so that the direction of movement of the objects (see the arrow) relative to the direction of movement of the transport units 2, normally rectilinear, forms an angle α normally of 30 or 45 degrees.

A first plurality of introduction units **4** is provided (shown by arrows as highlighted above in figure 3), each configured to receive objects **P** which can be single objects or sequences of objects separated from one another to feed them to the transport units **2,** allowing introduction of the objects **P** into the sorting path **S.**

A second plurality of discharge units **5** is provided (illustrated schematically by rectangles as indicated above in figure 3) each of which is configured to receive objects discharged **Pₒᵤₜ** by the transport units **2** when these objects **P** are diverted from the sorting path **S.**

Preferably each transport unit 2 comprises one or more conveyor belts 40 (detailed in figure 5) and the discharge units 5 are arranged along one or more sides of the sorting path S, also in non-rectilinear stretches. In figure 5, by way of example, two chute-type discharge units 5 are illustrated. However, it is clear that the number and structure of the discharge units can be different from that illustrated in figure 5.

An electronic control unit **CPU** commands the introduction units **4** (according to known techniques) to provide the synchronization that allows (via the movement of the belts 36 in the example shown) loading of the objects **P** onto transport units **2** without objects and discharges the object **P** towards a discharge unit **5** selected on the basis of the given destination of the object **P** communicated to the electronic control unit **CPU.** The object is discharged, in the example illustrated, by the movement of the belt or belts **40.**

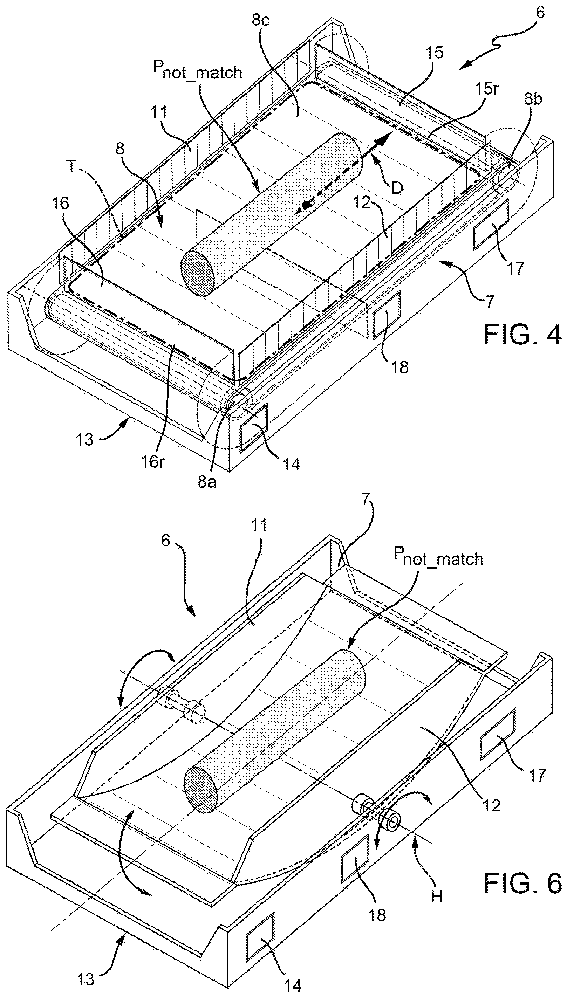

According to the present invention, special transport units **6** are provided (illustrated in figure 3 by octagons and detailed in figures 4 and 5) comprising, according to a first embodiment:
- a base structure **7** having such dimensions and shape that it can be received by any of the transport units 2;
- at least one motorized conveyor belt **8** movable relative to the base structure **7** along a direction **D** (see figures 4 and 5) substantially orthogonal to the direction of movement of the sorting system S and adapted to support a non-machinable object **P_{not-match},** namely having an irregular shape, for example not parallelepipedal), unstable contents or also dimensions significantly smaller or larger than the standard ones (in the example, the non-machinable object P_{not-match} is a cardboard tube containing sheets);
- at least one pair of containment fins **11,12** that extend along the direction D along opposite major sides of the conveyor belt **8** and which are supported, in the embodiment illustrated in figure 4, by the base structure **7;**
- a control unit **14** adapted to provide the movement of the conveyor belt **8** along the direction D when the special mobile unit **6** is arranged next to a discharge unit **5** to allow ejection of the object from the conveyor belt **8** and dispatch of only the non-machinable object **P_{not-match}** carried by the belt 8 to a discharge unit **5.** For example (see figure 5), the non-machinable object **P_{not-match}** is sent to the chute.

In the example illustrated, the conveyor belt 8 extends between a front cylinder **8a** and a rear cylinder **8b,** of which at least one is motorized, defining a plane portion **8c** delimited laterally (namely in a transverse direction to D) by the containment fins **11,12.**

The non-machinable object **P_{not-match}** is adapted to position itself on the plane portion 8c.

A pair of further containment fins **15,16** are also provided extending perpendicular to the direction D parallel to the axis of the belt movement cylinders 8a, 8b and therefore perpendicular to the opposite sides of the conveyor belt 8.

The further containment fins **15,16** having plane rectangular shape are rigidly connected, for example glued or welded, via a major edge 15r, 16r to the conveyor belt 8 and therefore move integrally with the belt, being perpendicular to the plane portion 8c.

In this way, both the further containment fins 15, 16 are movable between a rest position (illustrated in figure 4) in which the further containment fins **15,16** prevent the movement of the non-machinable object **P_{not-match}** beyond the outline T (see figure 4) of the plane portion 8c, and an actuating discharge position in which the further containment fins **15,16,** moving integrally with the conveyor belt 8, help to push, together with the plane portion 8c, the non-machinable object **P_{not-match}** towards a discharge unit 5 selected following the actuation command imparted by the electronic control unit CPU.

The base structure **7** is shaped like a tray and is provided with a plane wall **13** configured to rest on the plane portion of a transport unit **2** (see the enlargement of figure 5), in particular on the belts 40.

Alternatively to the above, the base structure **7** could be provided with wheels or rollers (not illustrated) configured to rest on the plane portion of a transport unit **2,** in particular on the belts **40** (see figure 5), and the autonomous movement of the base structure 7 and therefore of the special transport unit 6. For example, four wheels can be provided (not illustrated), of which at least two are steering and two are motorized. In this way the special mobile unit 6 can operate as an Autonomous Mobile Robot (AMR).

Alternatively, the containment fins **11,12** can each comprise a plurality of walls separated from one another (not illustrated) and connected, each by one of its own peripheral edges, to the edges of the conveyor belt 8. In this case the containment fins are not carried by the base structure **7,** but are directly connected to and integral in their movement with the conveyor belt 8.

The special units 6 further comprise:
- an electrical energy storage unit **17,** for example a battery or super capacitors, characterized by being able to store an electric charge sufficient for discharging at least one object towards the discharge units 5;
- a short-range communication system **23** (for example radio, infrared, optical or other, for example BlueTooth^{™}) configured to carry out a data communication between the control unit **14** of the special transport unit **6** and a corresponding control unit (not illustrated) of the transport unit 2; in this way via said data communication, the unit **2** can transmit the discharge commands coming from the electronic control unit CPU to the special transport unit **6.**

Alternatively or additionally, one or more sensors **18** (for example accelerometers) can be provided on the special unit 6 able to detect and recognize specific oscillation patterns of the special transport unit **6** caused by small sudden movements of the belt 40 of the transport unit **2** in the direction of the discharge unit **5** which are used as a discharge command. The control unit 14 is configured to recognize said patterns, according to known techniques, to generate the movement of the conveyor belt 8 and therefore discharge the objects towards the discharge outlets.

**In use,** when an object **P_{not-match}** has to be sorted, it is arranged - manually by the operator or by means of automatic or robotized systems - on a special mobile unit **6,** in particular it is rested on the plane portion 8c. The special mobile unit **6** is subsequently conveyed towards an introduction unit **4** which transfers it via the belts 36 onto one or more transport units **2** (see figure 5 in which the transport units 2 are schematized).

In particular, the special mobile units 6 can be loaded on the transport units 2 by any one of the introduction units 4, thus an introduction unit 4 can load on a transport unit 2 a single object P, a special mobile unit 6 with product P_{non-machinable} or both (see figure 5). The plane wall **13** is arranged stably on the belts 40 of the transport unit **2** preventing the movement of the base structure **7** with respect to the belts of the transport unit **2.** The object **P_{rot-match}** cannot fall from the conveyor belt 8 since it is retained by the fins **11, 12, 15** and **16.** In this way, also irregular or unstable objects can be handled which, due to their nature, would move with respect to the plane portion **8c** on which they rest. Discharging of the object **P_{not-match}** towards a discharge unit **5** is carried out by the movement of the conveyor belt 8 arranged with the direction **D** transverse to the sorting path S so as to allow ejection of the object **P_{not-match}** and therefore discharge of the object towards a discharge unit **5.** The special unit 6 remains in the sorting path S and more precisely on the belt transport unit 2 on which it had been loaded (the belt or belts 40 of the transport unit have not been moved during release of the object **P_{not-match}** towards a discharge unit) .

One or more extraction discharge units 5-e are provided (schematized by a rectangle in figure 3 and detailed in figure 5 by means of conveyor belts B parallel to one another) configured to receive said special mobile units 6 empty, namely after they have discharged the object **P_{not-match}.**

For example, the extraction discharge units 5-e can be physically separate from the discharge units 5; in particular, the extraction discharge units 5-e are adapted to receive only the special mobile units 6 and not the objects **P_{not-match},** which are discharged onto the discharge units 5.

Said extraction discharge units 5-e communicate with the inlet of a by-pass transport system 20 (see figure 3) which feeds the empty special units 6 towards a loading area 22 where the special units 6 are stored ready for handling further objects P_{not-match}.

The sorting system 1 comprises a recharging system 24 configured to supply electrical energy to the electrical energy storage unit 17 during transit of the special unit 6 along the by-pass path 20.

In this way, the utilization cycle time of the special transport units 6 is optimized, allowing minimization of the number necessary to guarantee the required sorting capacity.

On the basis of the above, unlike the known art, the special units 6 are not released into the discharge units 5 which can be used indifferently for receiving machinable and/or non-machinable objects; furthermore, operations for recovery of the containers from the discharge outlets are avoided.

The sorting system equipped with this innovative solution is therefore able to handle machinable and/or non-machinable objects, without structural modifications to the transport units 2 which can transport machinable objects and special units 6 indifferently.

Alternatively to what is illustrated in figures 4 and 5, the special units 6 produced according to a second embodiment comprise:
- a base structure **7** having such dimensions and shape that it can be received by any of the transport units 2 and directed to each of the discharge units 5;
- at least one oscillating tray 30 oscillating around an axis H substantially parallel to the path S and adapted to support a non-machinable object **P_{not-match}** namely having an irregular shape (for example non-parallelepipedal), unstable contents or also dimensions significantly smaller or larger than the standard ones (in the example the non-machinable object P_{not-match} is a cardboard tube containing sheets);
- at least one pair of containment fins **11,12** which extend along opposite major sides of the oscillating tray 30; and
- a control unit **14** adapted to carry out the rotation of the oscillating tray 30 along the axis H when the special mobile unit **6** is arranged next to a discharge unit **5** to allow discharge by gravity of the object from the oscillating tray and dispatch only of the non-machinable object carried by the tray to a discharge unit **5,** for example a chute. Also in this case an electrical energy storage unit **17,** a short-range communication system **23** and one or more sensors **18** are provided. The base structure **7** could be provided with wheels or rollers configured for resting on the plane portion of a transport unit **2,** in particular on the belts 40 and autonomously moving the base structure 7 and therefore the special transport unit 6 provided with oscillating tray. For example, four wheels can be provided, at least two of which are steering and two are motorized. In this way the special mobile unit 6 can operate as an Autonomous Mobile Robot (AMR).

### Reference numbers

2 transport unit
S sorting path
4 introduction unit
5 discharge unit
5-e extraction discharge unit
CPU electronic control unit
6 special transport unit
7 base structure
8 conveyor belt of special transport unit 6
D direction
11,12 containment fins
14 control unit
8a front cylinder
8b rear cylinder
8c plane portion
13 plane wall
15, 16 further containment fins
17 electrical energy storage unit
18 sensors
20 by-pass transport system
22 loading area
23 short-range communication system
24 recharging system
30 oscillating tray
40 conveyor belt of transport unit 2
B conveyor belt of extraction discharge outlet 5-e

## Claims

1. A system for sorting objects (1), in particular baggage, parcels, postal items or loose objects comprising:
- a plurality of transport units (2) which are arranged, one adjacent to the other, and move along a sorting path (S) along which the objects are transported;
- a first plurality of introduction units (4) each configured to receive single objects (P) or sequences of objects separated from each other to feed them to the transport units (2) allowing the objects (P) to be introduced into the sorting path (S);
- a second plurality of discharge units (5) each of which is configured to receive objects discharged (Pₒᵤₜ) by the transport units (2) when these objects (P) are diverted from the sorting path (S),
special mobile units (6) each comprising:
- a base structure (7) having such dimensions and shape that it can be received by any of the transport units (2),
- support means carried by the base structure (7) and configured to support a non-machinable object (**P_{not-match}**), namely having a non-standard or irregular shape or even dimensions significantly larger than the standard ones;
- ejection means configured to eject said non-machinable object (**P_{not-match}**) from the support means and direct it towards a discharge unit (5); and
- a control unit (14) which is adapted, in response to a discharge command, to operate said ejection means when the special mobile unit (6) is arranged closed to a discharge unit (5) to allow the dispatch of only the non-machinable object (**P_{not-match}**) carried by the support means to the discharge unit (5);
wherein the object sorting system (1) comprises one or more extraction discharge units (5-e) configured to receive said special mobile units (6) following discharge of the non-machinable object (**P_{not-match}**);
said extraction discharge units (5-e) are further configured to communicate with an inlet of a by-pass transport system (20) which feeds the empty special mobile units (6) towards a loading area (22) where the special mobile units (6) are stored ready for handling further non-machinable objects (**P_{not-match}**);
**characterized in that** the special mobile units (6) comprise an electrical energy storage unit (17) configured to store an electric charge sufficient to discharge at least one object (**P_{not-match}**) towards the discharge units (5);
said object sorting system (1) also comprising a recharge system (24) configured to supply electrical energy to the electrical energy storage unit (17) during transit of the special mobile unit (6) along the by-pass transport system (20).

2. The system according to claim 1, wherein the support means comprise a motorized conveyor belt (8) movable with respect to the base structure (7) along a direction (D) and adapted to support the non-machinable object (**P_{not-match}**), a pair of containment fins (11, 12) extends along said direction (D) along the opposite major sides of the motorized conveyor belt (8) and the control unit (14) is adapted, in response to a discharge command, to carry out the movement of the motorized conveyor belt (8) along said direction (D) when the special mobile unit (6) is arranged next to a discharge unit (5) realizing said ejection means to allow the dispatch of only the non-machinable object (**P_{not-match}**) carried by the motorized conveyor belt (8) to a discharge unit (5).

3. The system according to claim 2, wherein a pair of additional containment fins (15, 16) is provided, extending perpendicularly to said direction (D) perpendicularly to the opposite sides of the motorized conveyor belt (8).

4. The system according to claim 3, wherein the motorized conveyor belt (8) extends between a front cylinder (8a) and a rear cylinder (8b) defining a plane portion (8c) delimited at the sides by the containment fins (11, 12); the further containment fins (15, 16) are rigidly connected by an edge (15r, 16r) thereof to the motorized conveyor belt (8) and therefore move integrally with the belt.

5. The system according to claim 3 or 4, wherein each containment fin comprises a plurality of walls separated from one other and connected, each by its own peripheral edge, with the edges of the motorized conveyor belt (8).

6. The system according to claim 1, wherein the support means comprise at least one oscillating tray (30) adapted to support a non-machinable object (**P_{not-match}**);
the control unit (14) is configured to rotate the oscillating tray (30) along the axis (H) realizing said ejection means when the special mobile unit (6) transits in front of a discharge unit (5) to allow discharging the object by gravity from the oscillating tray and dispatching only the non-machinable object carried by the tray to a discharge unit (5).

7. The system according to claim 6, wherein a pair of containment fins (11, 12) is provided extending along opposite major sides of the oscillating tray (30).

8. The system according to any one of the preceding claims, wherein the base structure (7) is shaped as a tray and is provided with a plane wall (13) configured to rest on a transport unit (2).

9. The system according to any one of the preceding claims, wherein each transport unit (2) comprises one or more conveyor belts (40) on which said base structure (7) is adapted to rest.

10. The system according to any one of the preceding claims, wherein the discharge units (5) are arranged along at least one side of the sorting path (S).

11. The system according to claim 10, wherein the extraction discharge units (5-e) are adapted to receive only the special mobile units (6).

12. The system according to any one of the preceding claims, wherein the special mobile units (6) further comprise a short-range communication system (23) configured to carry out a data communication between said control unit (14) of the special mobile unit (6) and a corresponding control unit of the transport unit (2); the transport unit (2) is configured to transmit the discharge commands coming from a central electronic control unit CPU to the special mobile unit (6).

13. The system according to any one of the preceding claims, wherein each transport unit (2) comprises one or more conveyor belts (40) on which said base structure (7) is adapted to rest; said special mobile unit (6) is provided with at least one sensor (18) cooperating with the control unit (14) to detect and recognize specific transport oscillation patterns of the special mobile unit (6) caused by movements of the belt (40) of the transport unit (2) in the direction of the discharge unit (5) which are used as a discharge command to activate said ejection means.

14. The system according to any one of the preceding claims, wherein the base structure (7) is provided with wheels or rollers configured for resting on the plane portion of a transport unit (2) and autonomously moving the base structure (7) and thus the special mobile unit (6) operating as an Autonomous Mobile Robot (AMR).

15. The system according to any one of the preceding claims, wherein the interface part of the introduction unit (4) with the sorting system (1) is made with parallel belts (36) arranged in such a way that the movement direction of the objects with respect to the direction of movement of the transport units (2), normally rectilinear, forms an angle α normally of 30 or 45 degrees.

## Patentansprüche

1. System zum Sortieren von Gegenständen (1), insbesondere von Gepäckstücken, Paketen, Postelementen oder losen Gegenständen, das Folgendes umfasst:
- mehrere Beförderungseinheiten (2), die zueinander benachbart angeordnet sind und sich entlang eines Sortierwegs (S), entlang dessen die Gegenstände befördert werden, bewegen;
- eine erste Mehrzahl von Einspeisungseinheiten (4), die jeweils konfiguriert sind, einzelne Gegenstände (P) oder Abfolgen von Gegenständen, die voneinander getrennt sind, zu empfangen, um diese den Beförderungseinheiten (2) zuzuführen, wobei ermöglicht wird, dass die Gegenstände (P) in den Sortierweg (S) eingespeist werden;
- eine zweite Mehrzahl von Auslasseinheiten (5), die jeweils konfiguriert sind, Gegenstände (Pₒᵤₜ) zu empfangen, die durch die Beförderungseinheiten (2) ausgelassen werden, wenn diese Gegenstände (P) aus dem Sortierweg (S) ausgeleitet werden,
mobile Spezialeinheiten (6), die jeweils Folgendes umfassen:
- eine Grundstruktur (7), die derartige Abmessungen und eine derartige Form aufweisen, dass sie durch jede der Beförderungseinheiten (2) aufgenommen werden kann,
- Trägermittel, die durch die Grundstruktur (7) getragen werden und konfiguriert sind, einen nicht maschinell verarbeitbaren Gegenstand (P_{not-match}) zu tragen, der konkret eine nicht reguläre oder eine unregelmäßige Form oder sogar Abmessungen, die erheblich größer als die regulären sind, aufweist;
- Auswurfmittel, die konfiguriert sind, den nicht maschinell verarbeitbaren Gegenstand (P_{not-match}) vom Trägermittel auszuwerfen und ihn zu einer Auslasseinheit (5) zu lenken; und
- eine Steuereinheit (14), die ausgelegt ist, als Antwort auf einen Auslassbefehl die Auswurfmittel zu betätigen, wenn die mobile Spezialeinheit (6) nahe an einer Auslasseinheit (5) angeordnet ist, derart, dass die Abgabe lediglich des nicht maschinell verarbeitbaren Gegenstands (P_{not-match}), der durch das Trägermittel getragen wird, an die Auslasseinheit (5) ermöglicht wird;
wobei das Gegenstandssortiersystem (1) eine oder mehrere Extraktionsauslasseinheiten (5-e) umfasst, die konfiguriert sind, auf das Auslassen des nicht maschinell verarbeitbaren Gegenstands (P_{not-match}) folgend die mobilen Spezialeinheiten (6) aufzunehmen;
wobei die Extraktionsauslasseinheiten (5-e) ferner konfiguriert sind, mit einem Einlass eines Umgehungsbeförderungssystems (20) in Verbindung zu stehen, das die leeren mobilen Spezialeinheiten (6) zu einem Beladebereich (22) zuführt, wo die mobilen Spezialeinheiten zum Handhaben weiterer nicht maschinell verarbeitbarer Gegenstände (P_{not-match}) einsatzbereit gelagert werden;
**dadurch gekennzeichnet, dass** die mobilen Spezialeinheiten (6) eine Speichereinheit (17) für elektrische Energie umfassen, die konfiguriert ist, eine elektrische Ladung zu speichern, die ausreicht, um mindestens einen Gegenstand (P_{not-match}) zu den Auslasseinheiten (5) auszulassen;
wobei das Gegenstandssortiersystem (1) außerdem ein Wiederaufladungssystem (24) umfasst, das konfiguriert ist, der Speichereinheit (17) für elektrische Energie während des Durchgangs der mobilen Spezialeinheit (6) entlang des Umgehungsbeförderungssystems (20) elektrische Energie zuzuführen.

2. System nach Anspruch 1, wobei die Trägermittel ein motorisiertes Förderband (8) umfassen, das in Bezug auf die Grundstruktur (7) in einer Richtung (D) beweglich ist und ausgelegt ist, den nicht maschinell verarbeitbaren Gegenstand (P_{not-match}) zu tragen, wobei sich ein Paar Einschlussrippen (11, 12) in der Richtung (D) entlang der gegenüberliegenden Hauptseiten des motorisierten Förderbands (8) erstreckt und die Steuereinheit (14) ausgelegt ist, als Antwort auf einen Auslassbefehl die Bewegung des motorisierten Förderbands (8) in der Richtung (D) auszuführen, wenn die mobile Spezialeinheit (6) neben einer Auslasseinheit (5) angeordnet ist, wobei die Auswurfmittel realisiert werden, derart, dass die Abgabe lediglich des nicht maschinell verarbeitbaren Gegenstands (P_{not-match}), der durch das motorisierte Förderband (8) getragen wird, an eine Auslasseinheit (5) ermöglicht wird.

3. System nach Anspruch 2, wobei ein Paar zusätzlicher Einschlussrippen (15, 16) vorgesehen ist, die sich senkrecht zur Richtung (D) senkrecht zu den gegenüberliegenden Seiten des motorisierten Förderbands (8) erstrecken.

4. System nach Anspruch 3, wobei sich das motorisierte Förderband (8) zwischen einem vorderen Zylinder (8a) und einem hinteren Zylinder (8b) erstreckt, wobei ein ebener Abschnitt (8c) definiert wird, der an den Seiten durch die Einschlussrippen (11, 12) begrenzt ist; wobei die weiteren Einschlussrippen (15, 16) durch einen Rand (15r, 16r) davon starr mit dem motorisierten Förderband (8) verbunden sind und sich daher einteilig mit dem Band bewegen.

5. System nach Anspruch 3 oder 4, wobei jede Einschlussrippe mehrere Wände umfasst, die voneinander getrennt sind und jeweils durch ihren eigenen Außenrand mit den Rändern des motorisierten Förderbands (8) verbunden sind.

6. System nach Anspruch 1, wobei die Trägermittel mindestens eine pendelnde Wanne (30) umfassen, die ausgelegt ist, einen nicht maschinell verarbeitbaren Gegenstand (P_{not-match}) zu tragen;
wobei die Steuereinheit (14) konfiguriert ist, die pendelnde Wanne (30) entlang der Achse (H) zu drehen, wobei die Auswurfmittel realisiert werden, wenn sich die mobile Spezialeinheit (6) vor einer Auslasseinheit (5) vorbeibewegt, derart, dass das Auslassen des Gegenstands durch die Schwerkraft aus der pendelnden Wanne und das Abgeben lediglich des nicht maschinell verarbeitbaren Gegenstands, der durch die Wanne getragen wird, an die Auslasseinheit (5) ermöglicht wird.

7. System nach Anspruch 6, wobei ein Paar Einschlussrippen (11, 12) vorgesehen ist, die sich entlang gegenüberliegender Hauptseiten der pendelnden Wanne (30) erstrecken.

8. System nach einem der vorhergehenden Ansprüche, wobei die Grundstruktur (7) als eine Wanne geformt ist und mit einer ebenen Wand (13) versehen ist, die konfiguriert ist, auf einer Beförderungseinheit (2) zu ruhen.

9. System nach einem der vorhergehenden Ansprüche, wobei jede Beförderungseinheit (2) ein oder mehrere Förderbänder (40), worauf die Grundstruktur (7) ausgelegt ist zu ruhen, umfasst.

10. System nach einem der vorhergehenden Ansprüche, wobei die Auslasseinheiten (5) entlang mindestens einer Seite des Sortierwegs (S) angeordnet sind.

11. System nach Anspruch 10, wobei die Extraktionsauslasseinheiten (5-e) ausgelegt sind, lediglich die mobilen Spezialeinheiten (6) aufzunehmen.

12. System nach einem der vorhergehenden Ansprüche, wobei die mobilen Spezialeinheiten (6) ferner ein Nahbereichskommunikationssystem (23) umfassen, das konfiguriert ist, eine Datenkommunikation zwischen der Steuereinheit (14) der mobilen Spezialeinheit (6) und einer entsprechenden Steuereinheit der Beförderungseinheit (2) auszuführen; wobei die Beförderungseinheit (2) konfiguriert ist, die Auslassbefehle, die von einer zentralen elektronischen Steuereinheit, CPU, kommen, an die mobile Spezialeinheit (6) zu übertragen.

13. System nach einem der vorhergehenden Ansprüche, wobei jede Beförderungseinheit (2) ein oder mehrere Förderbänder (40), worauf die Grundstruktur (7) ausgelegt ist zu ruhen, umfasst; wobei die mobile Spezialeinheit (6) mit mindestens einem Sensor (18) versehen ist, der mit der Steuereinheit (14) zusammenwirkt, um spezifische Beförderungsschwingungsmuster der mobilen Spezialeinheit (6) zu detektieren und zu erkennen, die durch Bewegungen des Bands (40) der Beförderungseinheit (2) in der Richtung der Auslasseinheit (5) bewirkt werden, die als ein Auslassbefehl, um die Auswurfmittel zu aktivieren, verwendet werden.

14. System nach einem der vorhergehenden Ansprüche, wobei die Grundstruktur (7) mit Rädern oder Rollen versehen ist, die zum Ruhen auf dem ebenen Abschnitt einer Beförderungseinheit (2) und zum automatischen Bewegen der Grundstruktur (7) und somit der mobilen Spezialeinheit (6) konfiguriert sind, die als ein selbstfahrender Roboter (AMR) arbeitet.

15. System nach einem der vorhergehenden Ansprüche, wobei der Schnittstellenabschnitt der Einspeisungseinheit (4) mit dem Sortiersystem (1) mit parallelen Bändern (36) ausgeführt ist, die auf eine derartige Weise angeordnet sind, dass die Bewegungsrichtung der Gegenstände in Bezug auf die Richtung der Bewegung der Beförderungseinheiten (2), in der Regel rechtwinklig, einen Winkel α in der Regel von 30 oder 45 Grad bildet.

## Revendications

1. Système (1) pour trier des objets, en particulier des bagages, des colis, des envois postaux ou des objets en vrac comprenant :
- une pluralité d'unités de transport (2) qui sont agencées, les unes adjacentes aux autres, et se déplacent le long d'un chemin de tri (S) le long duquel les objets sont transportés ;
- une première pluralité d'unités d'introduction (4) configurées chacune pour recevoir des objets (P) uniques ou des séquences d'objets séparés les uns des autres pour les acheminer jusqu'aux unités de transport (2), ce qui permet aux objets (P) d'être introduits dans le chemin de tri (S) ;
- une seconde pluralité d'unités d'évacuation (5), chacune étant configurée pour recevoir des objets évacués (Pₒᵤₜ) par les unités de transport (2) lorsque ces objets (P) sont déviés du chemin de tri (S),
- des unités mobiles spéciales (6) comprenant chacune :
- une structure de base (7) ayant des dimensions et une forme telles qu'elle peut être reçue par l'une quelconque des unités de transport (2),
- des moyens de support portés par la structure de base (7) et configurés pour supporter un objet non usinable (**P_{not-match}**), à savoir ayant une forme non standard ou irrégulière ou même des dimensions sensiblement plus grandes que celles standard ;
- des moyens d'éjection configurés pour éjecter ledit objet non usinable (**P_{not-match}**) des moyens de support et le diriger vers une unité d'évacuation (5) ; et
- une unité de commande (14) qui est adaptée, en réponse à un ordre d'évacuation, pour faire fonctionner lesdits moyens d'éjection lorsque l'unité mobile spéciale (6) est agencée près d'une unité d'évacuation (5) pour permettre l'envoi uniquement de l'objet non usinable (**P_{not-match}**) porté par les moyens de support vers l'unité d'évacuation (5) ;
dans lequel le système (1) de tri d'objets comprend une ou plusieurs unités d'évacuation et d'extraction (5-e) configurées pour recevoir lesdites unités mobiles spéciales (6) suite à l'évacuation de l'objet non usinable (**P_{not-match}**) ;
lesdites unités d'évacuation et d'extraction (5-e) sont en outre configurées pour communiquer avec une entrée d'un système de transport de contournement (20) qui achemine les unités mobiles spéciales (6) vides vers une zone de chargement (22) où les unités mobiles spéciales (6) sont stockées prêtes à manipuler d'autres objets non usinables (**P_{not-match}**) ;
**caractérisé en ce que** les unités mobiles spéciales (6) comprennent une unité de stockage d'énergie électrique (17) configurée pour stocker une charge électrique suffisante pour évacuer au moins un objet (**P_{not-match}**) vers les unités d'évacuation (5) ;
ledit système (1) de tri d'objets comprenant également un système de recharge (24) configuré pour fournir de l'énergie électrique à l'unité de stockage d'énergie électrique (17) durant le transit de l'unité mobile spéciale (6) le long du système de transport de contournement (20).

2. Système selon la revendication 1, dans lequel les moyens de support comprennent une bande transporteuse motorisée (8) mobile par rapport à la structure de base (7) le long d'une direction (D) et adaptée pour supporter l'objet non usinable (**P_{not-match}**), une paire d'ailettes de confinement (11, 12) s'étend le long de ladite direction (D) le long des côtés principaux opposés de la bande transporteuse motorisée (8) et l'unité de commande (14) est adaptée, en réponse à un ordre d'évacuation, pour mettre en œuvre le déplacement de la bande transporteuse motorisée (8) le long de ladite direction (D) lorsque l'unité mobile spéciale (6) est agencée à côté d'une unité d'évacuation (5) réalisant lesdits moyens d'éjection pour permettre l'envoi uniquement de l'objet non usinable (**P_{not-match}**) porté par la bande transporteuse motorisée (8) vers une unité d'évacuation (5).

3. Système selon la revendication 2, dans lequel une paire d'ailettes de confinement (15, 16) supplémentaires est prévue, s'étendant perpendiculairement à ladite direction (D) perpendiculairement aux côtés opposés de la bande transporteuse motorisée (8).

4. Système selon la revendication 3, dans lequel la bande transporteuse motorisée (8) s'étend entre un cylindre avant (8a) et un cylindre arrière (8b) définissant une portion plane (8c) délimitée sur les côtés par les ailettes de confinement (11, 12) ; les autres ailettes de confinement (15, 16) sont reliées de manière rigide par un bord (15r, 16r) de celles-ci à la bande transporteuse motorisée (8) et se déplacent par conséquent d'un seul bloc avec la bande.

5. Système selon la revendication 3 ou 4, dans lequel chaque ailette de confinement comprend une pluralité de parois séparées les unes des autres et reliées, chacune par son propre bord périphérique, aux bords de la bande transporteuse motorisée (8).

6. Système selon la revendication 1, dans lequel les moyens de support comprennent au moins un plateau oscillant (30) adapté pour supporter un objet non usinable (**P_{not-match}**) ;
l'unité de commande (14) est configurée pour faire tourner le plateau oscillant (30) le long de l'axe (H) réalisant lesdits moyens d'éjection lorsque l'unité mobile spéciale (6) transite devant une unité d'évacuation (5) pour permettre d'évacuer l'objet par gravité du plateau oscillant et d'envoyer uniquement l'objet non usinable porté par le plateau vers une unité d'évacuation (5).

7. Système selon la revendication 6, dans lequel une paire d'ailettes de confinement (11, 12) est prévue s'étendant le long de côtés principaux opposés du plateau oscillant (30).

8. Système selon l'une quelconque des revendications précédentes, dans lequel la structure de base (7) est en forme de plateau et est pourvue d'une paroi plane (13) configurée pour reposer sur une unité de transport (2).

9. Système selon l'une quelconque des revendications précédentes, dans lequel chaque unité de transport (2) comprend une ou plusieurs bandes (40) transporteuses sur lesquelles ladite structure de base (7) est adaptée pour reposer.

10. Système selon l'une quelconque des revendications précédentes, dans lequel les unités d'évacuation (5) sont agencées le long d'au moins un côté du chemin de tri (S).

11. Système selon la revendication 10, dans lequel les unités d'évacuation et d'extraction (5-e) sont adaptées pour recevoir uniquement les unités mobiles spéciales (6).

12. Système selon l'une quelconque des revendications précédentes, dans lequel les unités mobiles spéciales (6) comprennent en outre un système de communication à courte portée (23) configuré pour mettre en œuvre une communication de données entre ladite unité de commande (14) de l'unité mobile spéciale (6) et une unité de commande correspondante de l'unité de transport (2) ; l'unité de transport (2) est configurée pour transmettre les ordres d'évacuation provenant d'une unité de commande électronique centrale CPU à l'unité mobile spéciale (6).

13. Système selon l'une quelconque des revendications précédentes, dans lequel chaque unité de transport (2) comprend une ou plusieurs bandes (40) transporteuses sur lesquelles ladite structure de base (7) est adaptée pour reposer ; ladite unité mobile spéciale (6) est pourvue d'au moins un capteur (18) coopérant avec l'unité de commande (14) pour détecter et reconnaître des schémas d'oscillation de transport spécifiques de l'unité mobile spéciale (6) causés par des déplacements de la bande (40) de l'unité de transport (2) dans la direction de l'unité d'évacuation (5) qui sont utilisés comme ordre d'évacuation pour actionner lesdits moyens d'éjection.

14. Système selon l'une quelconque des revendications précédentes, dans lequel la structure de base (7) est pourvue de roues ou de rouleaux configurés pour reposer sur la portion plane d'une unité de transport (2) et déplacer de manière autonome la structure de base (7) et donc l'unité mobile spéciale (6) fonctionnant comme un robot mobile autonome (AMR).

15. Système selon l'une quelconque des revendications précédentes, dans lequel la partie d'interface de l'unité d'introduction (4) avec le système (1) de tri est créée avec des bandes parallèles (36) agencées de telle sorte que la direction de déplacement des objets par rapport à la direction de déplacement des unités de transport (2), normalement rectiligne, forme un angle α normalement de 30 ou 45 degrés.
